# DEMANDE DE BREVET EUROPEEN

(11) **EP 4 847 229 A1**
(43) Date de publication de la demande: **02.12.2026**
(21) Numéro de dépôt: 26180119.5
(22) Date de dépôt: 21.05.2026
(51) Int. Cl.: B29C 49/58, B29C 49/12, F16L 37/42, F16L 37/084, B29C 49/64, B29K 67/00, B29L 31/00

(54) **POSTE DE FORMAGE COMPORTANT UNE TIGE D'ETIRAGE RACCORDEE A UNE SOURCE DE FLUIDE SOUS PRESSION**

(30) Priorité: 28.05.2025 FR 2505757
(71) Demandeur: Sidel Participations, 76930 Octeville-sur-Mer (FR)
(72) Inventeur: LEMAIRE, Cédric, 76930 OCTEVILLE-SUR-MER (FR); GIRODIT, Guillaume, 76930 OCTEVILLE-SUR-MER (FR)
(74) Mandataire: Sidel Group

(57) **Abrégé**

L'invention concerne un poste (10) pour le formage de récipients par étirage-soufflage d'une préforme (12), comportant :
- une cavité (25) de moulage ;
- une tige (32) d'étirage coulissante entre une position rétractée et une position étendue dans la cavité (25) de moulage, la tige (32) présentant un canal (38) qui relie un orifice (40) d'entrée supérieur à une buse (42) ;
- une source (44) de fluide sous pression comportant un orifice (46) de sortie ;
- une conduite (48) flexible qui relie l'orifice (46) de sortie avec l'orifice (40) d'entrée ;
- un raccord (54) qui est interposé entre l'orifice (46) de sortie et l'orifice (40) d'entrée pour assurer le raccordement étanche de l'orifice (40) d'entrée avec l'orifice (46) de sortie ;
caractérisé en ce que le raccord (54) est un raccord rapide conçu pour être assemblé et désassemblé sans outils.

## Description

### Domaine technique de l'invention

L'invention concerne un poste pour le formage de récipients en matériau thermoplastique par étirage-soufflage d'une préforme, le poste comportant :
- une cavité de moulage destinée à recevoir une préforme ;
- une tige d'étirage qui est montée coulissante entre une position rétractée à l'extérieur de la cavité et une position étendue dans laquelle un tronçon inférieur est reçu dans la cavité de moulage, la tige présentant un canal qui relie un orifice d'entrée supérieur à au moins une buse située sur le tronçon inférieur ;
- une source de fluide sous pression comportant un orifice de sortie ;
- une conduite flexible qui relie l'orifice de sortie avec l'orifice d'entrée ;
- un raccord qui est interposé entre l'orifice de sortie et l'orifice d'entrée et qui comporte une première partie fixe agencée du côté de l'orifice de sortie et une deuxième partie amovible qui est agencée du côté de l'orifice d'entrée, les deux parties étant destinées à être emboîtées l'une dans l'autre pour assurer le raccordement étanche de l'orifice d'entrée avec l'orifice de sortie.

### Arrière-plan technique

Il est connu de réaliser des récipients en matériau thermoplastique, tel que le polyéthylène téréphtalate (PET), par étirage-soufflage de préformes dans une unité de formage.

En général, une préforme présente une forme axisymétrique. La préforme comporte un col qui présente déjà sa forme définitive, tandis qu'un corps de la préforme est destiné à être déformé pendant le procédé de formage. L'axe principal de la préforme passe par le centre du col.

Pour permettre sa déformation, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation.

Afin de réaliser des récipients présentant une paroi d'épaisseur sensiblement constante, il est connu de réaliser un étirage dit "bi-axial" de la matière constituant la paroi de la préforme pour la déformer plastiquement. Le procédé de formage comporte à cet effet une première étape de présoufflage durant laquelle du fluide de formage est injecté à une pression de présoufflage. Durant cette étape de présoufflage, une tige d'étirage coulissante est introduite coaxialement dans le col de la préforme en poussant le fond de la préforme de manière à étirer la paroi du corps dans une direction axiale.

A la fin de cette étape de présoufflage, une étape de soufflage est déclenchée, lors de laquelle un fluide de formage comprimé est injecté à une pression de soufflage, supérieure à la pression de présoufflage, dans le corps de la préforme de manière à permettre un étirage de la matière correctement répartie dans une direction globalement circonférentielle de la paroi du corps.

En général, ce procédé de formage est réalisé dans une cavité de moulage qui comporte une empreinte conforme au récipient final à obtenir. Lors de l'étape de soufflage, la paroi du corps de la préforme est plaquée contre la paroi de l'empreinte sous l'effet de la pression du fluide de formage pour conférer au récipient sa forme définitive.

Lorsqu'elle commence à se déformer, la préforme devient un « récipient intermédiaire » avant d'arriver à sa forme définitive de « récipient final ».

Dans la suite de la description et dans les revendications, on emploiera le terme "corps creux" pour désigner indifféremment une préforme, un récipient intermédiaire ou un récipient fini. Lorsque les récipients en matière thermoplastique doivent être remplis avec un liquide chaud, tel que du thé ou un jus de fruit pasteurisé, il existe un risque qu'un récipient moulé à une température ambiante se rétracte et se déforme.

Pour éviter ce phénomène de rétractation lors d'un remplissage à chaud (« hot fill » en anglais), on recherche à accroître la résistance de la matière aux déformations induites par l'élévation de température lors du remplissage.

Une technique connue consiste à accroître de manière thermique la cristallinité de la matière en chauffant le moule à une température déterminée qui, supérieure à 100°C, est selon les applications généralement comprise entre 120°C et 160°C, et cela pour conférer au matériau thermoplastique constituant le récipient une structure résistante à la chaleur.

Lors du cycle de fabrication du récipient par la machine, le récipient est maintenu à la fin du soufflage en contact avec la face interne chauffée desdits au moins deux demi-moules formant le moule pour provoquer un accroissement de la cristallinité de la matière, cette technique est encore appelée thermofixation (ou « heat set » en anglais).

Pour cette application particulière, les unités de moulage de la machine comportent chacune des moyens de chauffage, par exemple par fluide caloporteur ou par chauffage électrique, qui sont associés au moule pour le chauffer à la température souhaitée et différents types de moyens de chauffage du moule sont connus de l'art antérieur.

La fabrication de récipients par la machine de moulage doit cependant être parfois interrompue pour réaliser des interventions sur la machine, plus particulièrement certaines opérations sur le moule chauffé nécessitent qu'un opérateur puisse intervenir en toute sécurité sur le moule et parfois puisse le manipuler.

Une intervention d'au moins un opérateur peut être requise pour effectuer par exemple une opération de nettoyage de la face interne des moules ou encore pour procéder au changement des moules, notamment lorsque l'on souhaite changer le format du récipient à fabriquer.

L'opérateur ne peut pas manipuler en toute sécurité un tel moule chauffé immédiatement après l'arrêt de la fabrication car le moule, généralement à une température supérieure à 100°C, est alors trop chaud.

Pour accélérer le refroidissement des moules, un fluide de refroidissement sous pression est introduit à l'intérieur du moule vide (sans préforme) par l'intermédiaire de la tige d'étirage.

Le fluide de refroidissement est notamment amené par une conduite flexible qui raccorde la tige d'étirage avec une source de fluide sous pression. La conduite flexible est raccordée à la source et à la tige par des raccords à vis étanches.

En variante qui peut être ou non combinée avec la fonction de refroidissement du moule, il est également connu pour certaines applications de réaliser, avant l'extraction du récipient du moule, un refroidissement du récipient. Pour réaliser un tel refroidissement du récipient, on utilise généralement la tige d'étirage qui, dans ce cas, est creuse et assure alors une double fonction, à savoir une fonction d'étirage d'une part et une autre fonction de refroidissement du récipient d'autre part. Dans ce cas, la tige d'étirage creuse comporte par exemple un canal central s'étendant axialement et communiquant avec une pluralité de buses par lesquelles un gaz, en particulier de l'air, est injecté à l'intérieur du récipient fabriqué afin de le refroidir.

Par ailleurs, les installations de fabrication de récipients en matériau thermoplastique sont conçues de manière à pouvoir fabriquer des récipients de formes et de dimensions variées. Ainsi, une même installation est susceptible de traiter des préformes présentant des cols de formats variés.

A cet égard, les tiges sont amenées à être changées fréquemment, en fonction de la forme du récipient, de la longueur du récipient à mouler, ou encore en fonction du diamètre du récipient.

En outre, la tige peut être raccordée ou non à la source de fluide sous pression en fonction du type remplissage, à froid ou à chaud, auquel est destiné le récipient.

Du fait de la présence de la conduite flexible, l'opération de changement de tige d'étirage est souvent longue car elle nécessite de serrer correctement les raccords à vis. En outre, cette opération peut être rendue complexe par un manque d'accessibilité au raccord vissé.

Il est en outre parfois nécessaire de changer la conduite flexible elle-même en fonction de la longueur de course requise pour la tige d'étirage en fonction de la longueur du récipient à obtenir. Un tel changement peut aussi être effectué pour remplacer une conduite flexible qui a été usée par de nombreux cycles d'utilisation.

### Résumé de l'invention

L'invention propose un poste pour le formage de récipients en matériau thermoplastique par étirage-soufflage d'une préforme, le poste comportant :
- une cavité de moulage destinée à recevoir une préforme ;
- une tige d'étirage qui est montée coulissante entre une position rétractée à l'extérieur de la cavité et une position étendue dans laquelle un tronçon inférieur est reçu dans la cavité de moulage, la tige présentant un canal qui relie un orifice d'entrée supérieur à au moins une buse située sur le tronçon inférieur ;

- une source de fluide sous pression comportant un orifice de sortie ;
- une conduite flexible qui relie l'orifice de sortie avec l'orifice d'entrée ;
- un raccord qui est interposé entre l'orifice de sortie et l'orifice d'entrée et qui comporte une première partie fixe agencée du côté de l'orifice de sortie et une deuxième partie amovible qui est agencée du côté de l'orifice d'entrée, les deux parties étant destinées à être emboîtées l'une dans l'autre pour assurer le raccordement étanche de l'orifice d'entrée avec l'orifice de sortie ; caractérisé en ce que le raccord est un raccord rapide conçu pour être assemblé et désassemblé sans outils.

Selon d'autres caractéristiques du poste réalisé selon les enseignements de l'invention :
- la partie amovible est agencée à une extrémité amont de la conduite flexible ;
- la partie fixe est fixée à l'orifice de sortie de la source de fluide sous pression ;
- la partie fixe comporte un mécanisme d'obturation automatique lorsque la partie amovible est démontée afin de bloquer le passage du fluide ;
- l'un parmi la partie fixe ou la partie amovible forme partie femelle tandis que l'autre forme une partie mâle destinée à être emboîtée dans la partie femelle ;
- le raccord rapide comporte un mécanisme de verrouillage automatique permettant de maintenir mécaniquement les deux parties du raccord rapide emboîtées l'une avec l'autre ;
- le mécanisme de verrouillage automatique comporte un organe de déverrouillage manuel ;
- la source de fluide sous pression délivre un fluide à une pression d'environ 40 bars ;
- une extrémité aval de la conduite flexible est fixée à l'orifice d'entrée par l'intermédiaire d'un raccord vissé.

### Brève description des figures

D'autres caractéristiques et avantages de l'invention apparaitront au cours de la lecture de la description détaillée qui va suivre pour la compréhension de laquelle on se reportera aux dessins annexés dans lesquels :
- La figure 1 est une vue en coupe axiale qui représente schématiquement un poste de formage réalisé selon les enseignements de l'invention dans lequel la tige d'étirage occupe sa position rétractée, une préforme étant insérée dans le moule ;

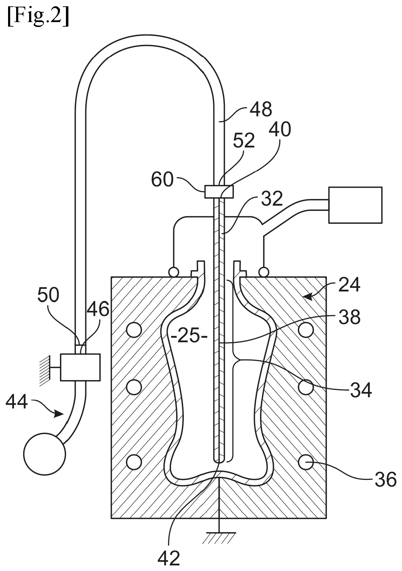

- La figure 2 est une vue similaire à celle de la figure 1 dans laquelle la tige d'étirage occupe sa position étendue, la préforme ayant été formée en un récipient final ;
- La figure 3 est une vue en perspective qui représente un raccord rapide en position démontée permettant de joindre une conduite flexible de la tige d'étirage à une source de fluide sous pression ;
- la figure 4 est une vue en coupe axiale qui représente le raccord rapide de la figure 3 en position démontée ;
- la figure 5 est une vue similaire à celle de la figure 4 dans laquelle le raccord rapide est en position montée.

### Description détaillée de l'invention

Dans la suite de la description, des éléments présentant une structure identique ou des fonctions analogues seront désignés par une même référence.

Dans la suite de la description, on adoptera à titre non limitatif une orientation axiale parallèle à un axe "Z0" d'une tuyère 30 et dirigée de bas en haut selon la flèche "A" des figures. Dans les exemples représentés aux figures, la direction axiale correspond, de manière non limitative, avec la direction de la gravité.

On définit aussi des directions radiales orthogonale à l'axe « Z0 » de la tuyère et dirigées depuis l'axe « Z0 » de la tuyère 30 vers l'extérieur.

On définit aussi des directions tangentielles dont chacune est orthogonale à la direction axiale et à une direction radiale associée.

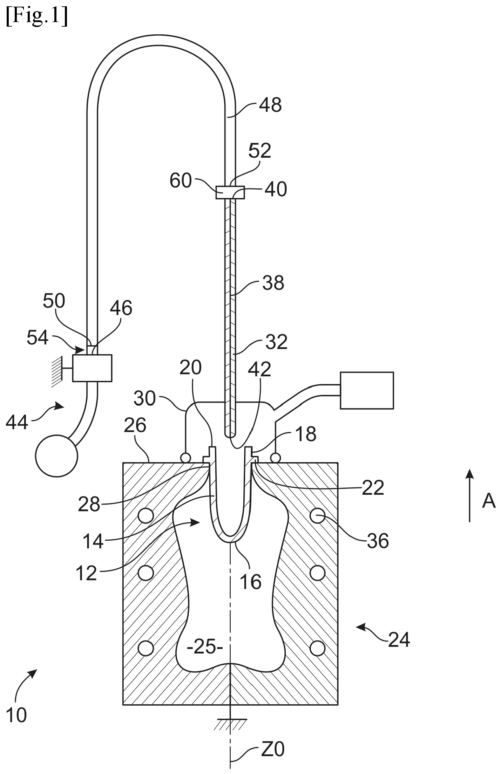

On a représenté à la figure 1 un poste 10 de formage d'un récipient par étirage-soufflage ou soufflage d'une préforme 12. Un tel poste 10 de formage est par exemple monté sur un carrousel rotatif d'une unité de formage (non représentée). L'unité de formage fait partie d'une installation (non représentée) de fabrication de récipients. L'installation comporte par exemple une unité de conditionnement thermique agencée en amont de l'unité de formage selon le sens de déplacement des préformes. Comme représenté à la figure 1, la préforme 12 présente une forme sensiblement axisymétrique autour d'un axe "Z0" principal d'orientation verticale. Elle comporte un corps 14 cylindrique à paroi tubulaire fermé à son extrémité inférieure par un fond 16, et qui est prolongé à son extrémité supérieure par un col 18 ouvert axialement vers le haut, lui aussi tubulaire. Le col 18 est délimité vers le haut par un bord circulaire d'extrémité supérieur qui sera appelé par la suite "buvant 20". Le col 18 de la préforme 12 comporte aussi une collerette 22 annulaire qui fait saillie radialement. La collerette 22 est ici agencée à la jonction entre la base du col 18 et le corps 14.

Une telle préforme 12 est réalisée en matériau thermoplastique, ici en polyéthylène téréphtalate (PET). Elle est classiquement obtenue par moulage par injection.

Le col 18 est généralement injecté de manière à posséder déjà sa forme définitive tandis que le corps 14 de la préforme 12 est destiné à subir une déformation relativement importante pour former le récipient final lors d'une étape ultérieure de formage.

A cet effet, avant d'être reçue dans le poste 10 de formage, le corps 14 de la préforme 12 est chauffé, par exemple dans une unité de conditionnement thermique, au-delà d'une température de transition vitreuse de manière à rendre ses parois malléables, tandis que le col 18 est maintenu sensiblement plus froid que la température de transition vitreuse.

Le poste 10 de formage comporte un moule 24 présentant une cavité 25 de moulage. Le corps 14 de la préforme 12 ainsi chauffé est reçu dans la cavité 25 de moulage. Le moule 24 comporte une face 26 supérieure horizontale. Le moule 24 comporte dans sa face 26 supérieure un orifice 28 de passage du col 18. La collerette 22 repose sur la face 26 supérieure du moule 24 de manière que le col 18 s'étende en saillie verticalement au-dessus de la face 26 supérieure du moule 24.

Le moule 24 est généralement réalisé en deux demi-moules assemblés selon un plan de joint vertical passant par l'orifice de passage du col 18. Cette configuration permet d'éjecter le récipient final par écartement des deux demi-moules à l'issue de l'opération de formage.

Le poste 10 de formage comporte aussi une tuyère 30 pour le formage de récipients en matériau thermoplastique par injection d'un fluide sous pression dans une préforme 12.

Le fluide de formage est ici un gaz, par exemple de l'air comprimé à 40 bars.

La tuyère 30 est représentée de manière très schématique à la figure 1.

Le poste 10 de formage comporte aussi une tige 32 d'étirage d'axe « Z0 ». Le tige 32 d'étirage est montée coulissante axialement le long de l'axe « Z0 » dans la tuyère 30 entre une position rétractée à l'extérieur de la cavité 25 de moulage, comme représentée à la figure 1, et une position étendue dans laquelle un tronçon 34 inférieur est reçu dans la cavité 25 de moulage.

Le poste 10 de formage est ici équipé d'un moule 24 pour des récipients destinés à être remplis à chaud. A cet effet, le moule 24 comporte des organes 36 de chauffage. Il s'agit par exemple de résistances chauffantes ou d'un circuit de fluide caloporteur. Un tel moule 24 est parfois connu sous l'appellation moule « HR » signifiant « Heat Resistant ». L'organe 36 de chauffage est notamment conçu pour chauffer le moule à une température d'environ 100°C, cette température pouvant varier en fonction du matériau constituant la préforme 12.

La tige 32 d'étirage présente un canal 38 axial qui relie un orifice 40 d'entrée supérieur à au moins une buse 42 de sortie située sur le tronçon 34 inférieur.

Le poste 10 de formage comporte une source 44 de fluide sous pression comportant un orifice 46 de sortie. L'orifice 46 de sortie est fixe par rapport au moule 24 en position fermé. Ainsi, lorsque le poste 10 de formage est embarqué sur un carrousel, l'orifice 46 de sortie est monté fixe sur le carrousel.

La source 44 de fluide sous pression est susceptible d'être commandée entre un état actif dans lequel elle délivre le fluide sous pression et un état inactif dans lequel le fluide sous pression ne sort pas par l'orifice 46 de sortie.

Le fluide sous pression est par exemple à une pression d'environ 40 bars. Il s'agit par exemple d'air sous pression.

Une conduite 48 flexible relie l'orifice 46 de sortie de la source 44 de fluide sous pression avec l'orifice 40 d'entrée de la tige 32 d'étirage. La conduite 48 flexible comporte ainsi une extrémité 50 amont qui est raccordée à l'orifice 46 de sortie de la source 44 de fluide sous pression et une extrémité 52 aval qui est raccordée à l'orifice 40 d'entrée de la tige 32 d'étirage.

Ainsi, lorsque la source 44 de fluide de formage est active et que la tige 32 d'étirage est dans sa position étendue, le fluide sous pression est injecté dans la cavité 25 de moulage par l'intermédiaire de la buse 42 de sortie.

Ceci permet par exemple de refroidir rapidement le moule 24 par échange de chaleur avec le fluide sous pression qui est évacué par l'orifice 28 supérieur. Dans ce cas, la tige 32 d'étirage est insérée dans la cavité 25 de moulage directement, sans présence de préforme 12.

Il est également connu pour certaines applications de réaliser, avant l'extraction du récipient du moule, un refroidissement du récipient. Pour réaliser un tel refroidissement du récipient, on utilise le fluide sous pression injecté dans le récipient par l'intermédiaire de la buse 42 de sortie de la tige 32 d'étirage qui a été insérée dans le récipient pendant son étirage.

Le fluide sous pression injecté par la tige 32 d'étirage peut aussi être utilisé pour maintenir une pression résiduelle dans le récipient en fin de formage pour s'assurer que les parois récipient restent en contact avec les parois de la cavité 25.

La flexibilité de la conduite 48 flexible permet d'accompagner le mouvement de coulissement de la tige 32 d'étirage, l'orifice 46 de sortie de la source 44 de fluide sous pression étant fixe.

Plus particulièrement, dans l'exemple représenté aux figures, la conduite 48 flexible est agencé de manière à former une boucle retournée formant un virage en "épingle à cheveux", s'étendant selon un plan sensiblement vertical ou horizontal entre ses deux extrémités 50, 52 qui sont disposées à une hauteur sensiblement identique. La boucle est ici agencée au-dessus de la tige 32 d'étirage.

La boucle présente un rayon de courbure adapté pour éviter toute contrainte excessive sur la conduite 48 flexible, tout en permettant un cheminement du fluide sans étranglement ni pli. Cette disposition en boucle permet de compenser le mouvement de coulissement de la tige 32 d'étirage tout en garantissant un positionnement compact dans un encombrement réduit.

Au moins un raccord 54 rapide est interposé entre l'orifice 46 de sortie de la source 44 de fluide sous pression et l'orifice 40 d'entrée de la tige 32 d'étirage. Un tel raccord 54 rapide est conçu pour être assemblé et désassemblé sans outils.

Il comporte une première partie 56 fixe agencée du côté de l'orifice 46 de sortie de la source 44 de fluide sous pression et une deuxième partie 58 amovible qui est agencée du côté de l'orifice 40 d'entrée de la tige 32 d'étirage.

Les deux parties 56, 58 sont destinées à être emboîtées l'une dans l'autre pour assurer le raccordement étanche de l'orifice 40 d'entrée avec l'orifice 46 de sortie.

La partie 58 amovible est ici agencée à l'extrémité 50 amont de la conduite 48 flexible.

Cette configuration particulièrement avantageuse permet de démonter simultanément la tige 32 d'étirage et sa conduite 48 flexible associée lors d'une opération de remplacement. En effet, en fonction de la course de coulissement de la tige 32 d'étirage, il peut être avantageux d'adapter la longueur de la conduite 48 flexible associée, notamment pour réduire le poids du poste 10 de formage et/ou pour réduire l'encombrement de la conduite 48 flexible.

En outre, le raccord 54 rapide peut être plus lourd qu'un raccord classique à vis. Le fait d'agencer le raccord 54 rapide du côté de la boucle qui ne coulisse pas en même temps que la tige 32 d'étirage permet de réduire l'inertie et donc l'énergie requise pour faire bouger la tige 32 d'étirage.

Dans le mode de réalisation représenté aux figures, la partie 56 fixe du raccord 54 rapide est fixée directement à l'orifice 46 de sortie de la source 44 de fluide sous pression.

En variante, une autre conduite flexible peut être interposée entre l'orifice 46 de sortie et la partie 56 fixe, par exemple pour faciliter la manipulation du raccord 54 rapide.

Dans le mode de réalisation représenté aux figures, l'extrémité 52 aval de la conduite 48 flexible est fixée à l'orifice 40 d'entrée de la tige 32 d'étirage par l'intermédiaire d'un raccord 60 vissé. Un tel raccord 60 vissé nécessite un vissage au moyen d'un outil adapté avec un couple déterminé pour garantir une bonne étanchéité, notamment compte tenu de la pression du fluide circulant dans la conduite 48 flexible.

Selon une autre variante de l'invention, le raccord rapide est interposé entre l'extrémité aval de la conduite flexible et l'orifice d'entrée de la tige d'étirage.

L'une parmi la partie 56 fixe ou la partie 58 amovible forme partie femelle tandis que l'autre forme une partie mâle destinée à être emboîtée dans la partie femelle.

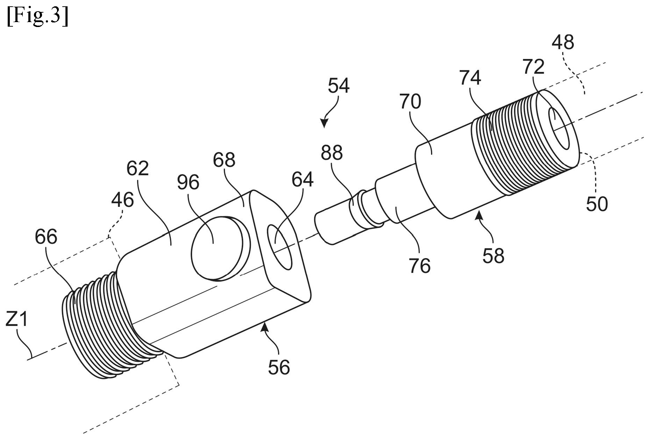

A titre d'exemple non limitatif représenté aux figures 3 à 5, la partie 56 fixe est une partie femelle tandis que la partie 58 amovible est une partie mâle.

Comme représenté aux figures 3 à 5, la première partie 56 fixe comporte un corps 62 tubulaire rigide d'axe « Z1 ». Le corps 62 tubulaire est ainsi traversé d'un canal 64 axial pour le passage de fluide.

Le corps 62 tubulaire présente une extrémité 66 arrière qui est destinée à être fixée à l'orifice 46 de sortie de la source 44 de fluide sous pression, de manière que l'orifice 46 de sortie soit raccordé de manière étanche avec le canal 64 axial. L'extrémité 66 arrière est ici filetée pour permettre sa fixation par vissage avec l'orifice 46 de sortie.

Le corps 62 tubulaire comporte aussi une extrémité avant qui présente ici la forme d'une douille 68 à une extrémité libre de laquelle le canal 64 axial débouche.

La deuxième partie 58 amovible comporte aussi un corps 70 tubulaire rigide d'axe « Z1 ». Le corps 70 tubulaire est traversé d'un canal 72 axiale pour le passage du fluide.

Le corps 70 tubulaire présente une extrémité 74 arrière qui est destinée à être fixée à l'extrémité 50 amont de la conduite 48 flexible, de manière que la conduite 48 flexible soit raccordée de manière étanche avec le canal 72 axial. L'extrémité 74 arrière est ici filetée pour permettre sa fixation par vissage avec l'extrémité 50 amont de la conduite 48 flexible.

Le corps 70 tubulaire comporte aussi une extrémité avant qui présente ici une forme complémentaire de celle d'une douille 68. L'extrémité avant présente ici la forme d'un about 76 tubulaire à une extrémité libre de laquelle le canal 72 axial débouche. L'about 76 est conçu pour être emboîté axialement dans le canal 64 axial de la douille 68. Ainsi, le canal 72 axial de la partie 58 amovible est raccordé au canal 64 axial de la partie 56 fixe.

Le raccord 54 rapide comporte aussi des moyens d'étanchéité de manière à assurer une étanchéité radiale fiable entre la partie 56 fixe et la partie 58 amovible lorsqu'elles sont emboîtées. Il s'agit par exemple de joints 78 toriques qui sont destinés à être intercalés radialement entre la face externe de l'about 76 et la face interne de la douille 68.

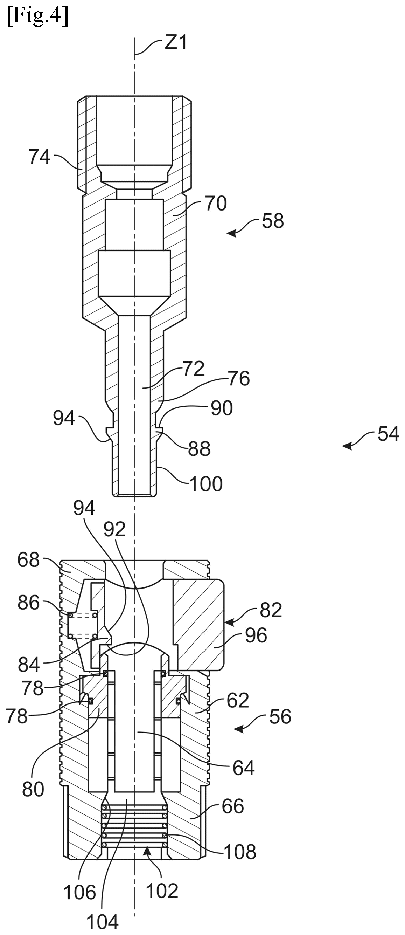

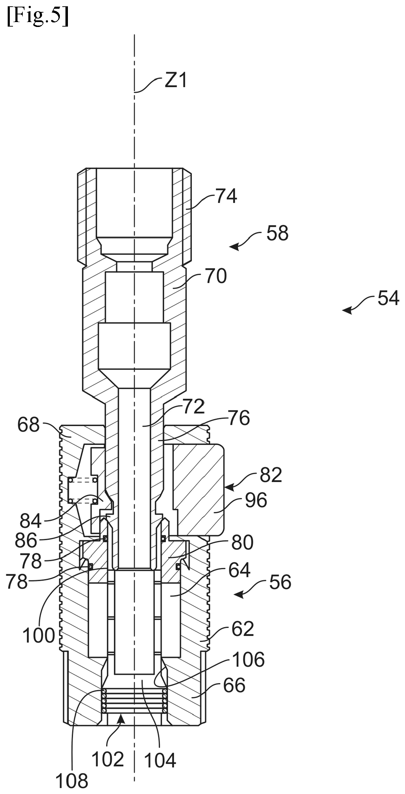

Dans le mode de réalisation représenté aux figures 4 et 5, les moyens d'étanchéité comportent deux joints 78 toriques. Ils sont ici tous les deux portés par la partie 56 fixe. Ils sont ici reçus dans les gorges interne et externe d'une bague 80 d'étanchéité qui est fixée à l'intérieur de la douille 68. La bague 80 d'étanchéité est par exemple réalisée en un matériau rigide, tel que du plastique ou du métal. Ainsi, un premier joint 78 torique garantit l'étanchéité entre la bague 80 d'étanchéité et la douille 68 tandis que le deuxième joint 78 torique garantit l'étanchéité entre la bague 80 d'étanchéité et l'about 76.

En outre, le raccord 54 rapide comporte un mécanisme 82 de verrouillage automatique permettant de maintenir mécaniquement les deux parties 56, 58 du raccord emboîtées l'une avec l'autre. Il s'agit par exemple d'un mécanisme à cames, à levier ou à billes, agencé pour permettre la fixation réversible des deux parties 56, 58. Le verrouillage peut être actionné manuellement ou automatiquement par exemple via un actionneur dans un mécanisme robotisé ou via un organe élastique.

Le mécanisme 82 de verrouillage automatique comporte ici un ergot 84 qui est monté coulissant radialement dans la douille 68 entre une position de verrouillage, dans laquelle il est étendu dans le canal 64 axial, et une position de déverrouillage, dans laquelle il est rétracté radialement vers l'extérieur du canal 64. L'ergot 84 est rappelé élastiquement vers sa position de verrouillage par un organe 86 élastique, tel qu'un ressort.

L'ergot 84 est destiné à coopérer avec un bourrelet 88 qui fait saillie radialement autour de l'about 76. Le bourrelet 88 est plus particulièrement délimité axialement vers l'arrière par une face 90 d'épaulement radiale qui est destinée à coopérer avec une face 92 radiale de l'ergot 84 pour empêcher le retrait axial de la partie 58 amovible lorsqu'elle est emboîtée dans la partie 56 fixe.

Pour permettre de commander automatiquement l'ergot 84 dans sa position de déverrouillage lors de l'emboîtement axial de la partie 58 amovible dans la partie 56 fixe, le bourrelet 88 et/ou l'ergot 84, ici les deux, comportent une rampe 94 inclinée.

Le mécanisme 82 de verrouillage automatique comporte ici un organe 96 de déverrouillage manuel. Il s'agit ici d'un bouton poussoir qui est porté par une bague 98 de verrouillage qui entoure le canal 64 axial de la douille 68. L'ergot 84 s'étend ici en saillie radiale vers l'intérieur de la bague 98 de verrouillage. Pour raccorder la conduite 48 flexible avec l'orifice 46 de sortie, la partie 58 amovible est emboîtée axialement avec la partie 56 fixe en insérant l'extrémité libre de l'about 76 dans le canal 64 axial de la douille 68. Se faisant, lorsque le bourrelet 88 entre en contact avec l'ergot 84, le contact entre les rampes 94 transforment le mouvement de coulissement axial de l'about 76 en mouvement de coulissement radial de l'ergot 84 vers sa position de déverrouillage, permettant ainsi le passage du bourrelet 88 derrière l'ergot 84. Ce dernier est alors rappelé élastiquement vers sa position de verrouillage, bloquant la partie 58 amovible en position emboîtée dans la partie 56 fixe par contact entre la face 90 d'épaulement et la face 92 radiale de l'ergot 84. Lors de ce mouvement d'emboîtement, un tronçon 100 d'extrémité de l'about 76 est introduit dans la bague 80 de verrouillage de manière que la face externe du tronçon 100 d'extrémité soit en contact étanche avec l'un des joints 78 d'étanchéité.

Ainsi, la conduite 48 flexible est raccordée de manière étanche et fiable à l'orifice 46 de sortie en une seule opération et sans utiliser d'outils.

Pour démonter la partie 58 amovible, un opérateur, humain ou robotisé, peut appuyer sur l'organe 96 de déverrouillage pour commander l'ergot 84 vers sa position de déverrouillage et ainsi permettre le retrait axial de l'about 76 par rapport à la douille 68. Lorsque la partie 58 amovible est désemboîtée de la partie 56 fixe, du fluide sous pression peut s'échapper de l'orifice 46 de sortie. C'est notamment le cas lorsque la source 44 de fluide sous pression est active en l'absence de conduite 48 flexible, par exemple lorsqu'on produit des récipients destinés à être remplis à froid ne nécessitant pas l'utilisation d'une tige 32 d'étirage munie d'un canal central. Dans ce cas, il est nécessaire de prévoir un moyen pour obturer l'orifice 46 de sortie.

On peut par exemple utiliser un bouchon rapporté sur la partie 56 fixe en lieu place de la partie 58 amovible. Un tel bouchon présente les mêmes caractéristiques structurelles et fonctionnelles que la partie 58 amovible précédemment décrite mais il est dénué de canal 72 axial pour empêcher la sortie du fluide sous pression.

Mais de préférence, la partie 56 fixe est munie d'un mécanisme 102 d'obturation automatique lorsque la partie 58 amovible est démontée afin de bloquer le passage du fluide. Cela permet d'éviter le recours au bouchon, qui forme une pièce supplémentaire qui, de plus, peut être oubliée lors de l'intervention d'un opérateur.

Ce mécanisme d'obturation automatique est par exemple formé par un clapet à ressort ou par un piston mobile, configuré pour obstruer le canal en position non connectée, et pour s'ouvrir automatiquement lors de l'emboîtement de l'about 76 dans la douille 68.

Dans l'exemple représenté aux figures, il s'agit d'un piston 104 qui est monté coulissant axialement dans le canal 64 axial de la partie 56 fixe entre une position d'obturation dans laquelle il est en appuie étanche contre un siège 106 annulaire pour obturer le canal 64, représentée à la figure 4, et une position de passage dans laquelle il est écarté axialement du siège 106 pour permettre le passage du fluide sous pression dans le canal 64, représentée à la figure 5. Le piston 104 est rappelé élastiquement par un ressort 108 vers sa position d'obturation. Il est sollicité vers sa position de passage à l'encontre de l'effort produit par le ressort 108 par l'extrémité de l'about 76 lorsqu'il est inséré axialement dans la douille 68 durant son emboîtement.

L'intégration d'un mécanisme d'obturation automatique permet de garantir une sécurité accrue lors de la déconnexion, en évitant les fuites de fluide.

Le poste 10 de formage réalisé selon les enseignements de l'invention permet de réaliser un changement de tige d'étirage très rapidement, sans utilisation d'outils.

En outre, les opérations de maintenance, notamment concernant la conduite flexible, sont simplifiées car il est possible de changer en une seule opération la tige et sa conduite flexible associée.

Le changement est en outre très fiable puisque le raccordement est réalisé avec un seul mouvement d'emboîtement. Il n'est plus nécessaire de vérifier que le raccord est bien serré comme lors de l'utilisation de raccords vissés.

Il permet en outre de changer simultanément la tige 32 d'étirage et sa conduite 48 flexible associée pour éviter d'encombrer le poste 10 de formage avec une conduite 48 flexible trop grande, voire inutile dans le cadre de l'utilisation d'un moule 24 non chauffé.

## Revendications

1. Poste (10) pour le formage de récipients en matériau thermoplastique par étirage-soufflage d'une préforme (12), le poste (10) comportant :
- une cavité (25) de moulage destinée à recevoir une préforme (12) ;
- une tige (32) d'étirage qui est montée coulissante entre une position rétractée à l'extérieur de la cavité (25) et une position étendue dans laquelle un tronçon (34) inférieur est reçu dans la cavité (25) de moulage, la tige (32) présentant un canal (38) qui relie un orifice (40) d'entrée supérieur à au moins une buse (42) située sur le tronçon (34) inférieur ;
- une source (44) de fluide sous pression comportant un orifice (46) de sortie ;
- une conduite (48) flexible qui relie l'orifice (46) de sortie avec l'orifice (40) d'entrée ;
**caractérisé en ce qu'** un raccord (54) qui est interposé entre l'orifice (46) de sortie et l'orifice (40) d'entrée et qui comporte une première partie (56) fixe agencée du côté de l'orifice (46) de sortie et une deuxième partie (58) amovible qui est agencée du côté de l'orifice (40) d'entrée, les deux parties (56, 58) étant destinées à être emboîtées l'une dans l'autre pour assurer le raccordement étanche de l'orifice (40) d'entrée avec l'orifice (46) de sortie et **en ce que** ledit raccord (54) est un raccord rapide conçu pour être assemblé et désassemblé sans outils.

2. Poste (10) selon la revendication précédente, **caractérisé en ce que** la partie (58) amovible est agencée à une extrémité (50) amont de la conduite (48) flexible.

3. Poste (10) selon l'une quelconque des revendications précédentes, **caractérisé en ce que** la partie (56) fixe est fixée à l'orifice (46) de sortie de la source (44) de fluide sous pression.

4. Poste (10) selon l'une quelconque des revendications précédentes, **caractérisé en ce que** la partie (56) fixe comporte un mécanisme (102) d'obturation automatique lorsque la partie (58) amovible est démontée afin de bloquer le passage du fluide.

5. Poste (10) selon la revendication précédente, **caractérisé en ce que** l'un parmi la partie (56) fixe ou la partie (58) amovible forme partie femelle tandis que l'autre forme une partie mâle destinée à être emboîtée dans la partie femelle.

6. Poste (10) selon l'une quelconque des revendications précédentes, **caractérisé en ce que** le raccord (54) rapide comporte un mécanisme (82) de verrouillage automatique permettant de maintenir mécaniquement les deux parties (56, 58) du raccord (54) rapide emboîtées l'une avec l'autre.

7. Poste (10) selon la revendication précédente, **caractérisé en ce que** le mécanisme (82) de verrouillage automatique comporte un organe (96) de déverrouillage manuel.

8. Poste (10) selon l'une quelconque des revendications précédentes, **caractérisé en ce que** la source (44) de fluide sous pression délivre un fluide à une pression d'environ 40 bars.

9. Poste selon l'une quelconque des revendications précédentes, **caractérisé en ce qu'**une extrémité (52) aval de la conduite (48) flexible est fixée à l'orifice (40) d'entrée par l'intermédiaire d'un raccord vissé.
